# EUROPÄISCHE PATENTSCHRIFT

(11) **EP 1 281 895 B1**
(45) Veröffentlichungstag und Bekanntmachung des Hinweises auf die Patenterteilung: **23.01.2008**
(21) Anmeldenummer: 02015474.6
(22) Anmeldetag: 12.07.2002
(51) Int. Cl.: F16H 63/34, F16H 63/36

(54) **Schaltsperrvorrichtung**
Shift lock mechanism
Mécanisme de verrouillage pour commande de changement de vitesse

(30) Priorität: 04.08.2001 DE 10138448
(43) Veröffentlichungstag der Anmeldung: 05.02.2003
(73) Patentinhaber: Volkswagen Aktiengesellschaft, 38436 Wolfsburg (DE)
(72) Erfinder: Ahrens, Rainer, 38124 Braunschweig (DE); Becker, Volker, 38518 Gifhorn (DE); Pape, Thomas, 38547 Calberlah (DE); Wilken, Martin, 38114 Braunschweig (DE); Bartenbach, Harald, 74360 Ilsfeld (DE)

(56) Entgegenhaltungen:
- DE-A- 4 118 931
- DE-A- 19 853 584
- DE-C- 19 609 210
- US-A- 3 587 351
- US-A- 3 643 520
- PATENT ABSTRACTS OF JAPAN Bd. 0062, Nr. 41 (P-158), 30. November 1982 (1982-11-30) & JP 57 139831 A (NISSAN JIDOSHA KK), 30. August 1982 (1982-08-30)

## Beschreibung

Die Erfindung betrifft eine Schaltsperrvorrichtung zur Gangschaltsperrung eines mechanisch schaltbaren Kraftfahrzeuggetriebes, insbesondere eines Doppelkupplungsgetriebes, mit einem formschlüssig wirksamen Sperrelement, durch das eine erste von mindestens zwei parallel angeordneten Schaltschienen gegen eine Axialverschiebung in eine einem geschalteten Gang entsprechende Endposition sperrbar ist, und mit einem Entriegelungselement zur Entsperrung der ersten Schaltschiene.

Das gleichzeitige Einlegen von zwei Gängen eines einfachen, d.h. mit einer einzigen Getriebeeingangswelle und einer einzigen Motorkupplung versehenen Stufenschaltgetriebes würde zu einem Blockieren des Getriebes führen und wird daher zumeist konstruktiv verhindert. Bei manuell und automatisiert schaltbaren Stufenschaltgetrieben, die über eine Schaltwelle und mehrere Schaltschienen betätigbar ausgebildet sind, wird das gleichzeitige Einlegen von zwei Gängen dadurch verhindert, dass bei einem Wechsel von einem Gang in einen anderen, derselben Schaltschiene zugeordneten Gang der eine Gang durch die Verschiebung der Schaltschiene zwangsläufig ausgelegt wird, und dass bei einem Wechsel von einem Gang in einen anderen, einer anderen Schaltschiene zugeordneten Gang, der Wechsel der Verbindung der Schaltwelle von der einen Schaltschiene zu der anderen Schaltschiene, d.h. der den Wechsel der Schaltgasse bewirkende Wählvorgang, nur möglich ist, wenn sich die betreffenden Schaltschienen in ihrer Neutralposition befinden, d.h. alle Gänge ausgelegt sind. In gleicher Weise kann bei einem Doppelkupplungsgetriebe, das aus zwei jeweils eine separate Motorkupplung, eine eigene Getriebeeingangswelle, und eine Gruppe von Gängen aufweisenden Teilgetrieben besteht, das gleichzeitige Einlegen von zwei Gängen in jedem Teilgetriebe verhindert werden. Bei automatisiert schaltbaren Stufenschaltgetrieben, bei denen die Schaltstellantriebe unmittelbar auf die Schaltschienen wirken und das gleichzeitige Einlegen von zwei Gängen des Getriebes bzw. eines Teilgetriebes mechanisch möglich ist, sind aus Sicherheitsgründen spezielle formschlüssig wirksame Schaltsperrvorrichtungen erforderlich, durch die das gleichzeitige Einlegen von zwei Gängen des Getriebes bzw. in jedem der Teilgetriebe sicher verhindert wird.

So sind beispielsweise aus der DE 37 30 230 C1 und der DE 196 53 172 A1 Schaltsperrvorrichtungen bekannt, bei denen jeweils bei einer schaltungsbedingten Axialverschiebung einer von mehreren parallel angeordneten Schaltschienen ein Sperrelement durch eine Steuerfläche in Richtung mindestens einer anderen Schaltschiene derart verschoben wird, dass die andere Schaltschiene durch einen Eingriff des Sperrelementes in eine zugeordnete Ausnehmung in ihrer Neutrallage formschlüssig gegen eine Axialverschiebung gesichert ist und somit kein weiterer Gang eingelegt werden kann. In der DE 37 30 230 C1 ist das Sperrelement als eine Verriegelungsplatte ausgebildet, die in einer Radialebene quer zu den Schaltschienen angeordnet und mit jeweils drei geneigte Sperrkanten aufweisenden Aussparungen in Nuten der Schaltschienen geführt ist. In der DE 196 53 172 A1 ist das Sperrelement als ein zwischen den Schaltschienen angeordnetes Sperrblech ausgebildet, das zum wechselseitigen Eingriff in Sperrnuten der Schaltschienen quer zu diesen schwenkbar gelagert ist.

In der DE 41 18 931 A1 und der gattungsgemäßen DE 196 09 210 C1 sind Schaltsperrvorrichtungen beschrieben, durch die Schaltschienen und Schaltschwingen, die jeweils gemeinsam als Schaltelemente in einem Getriebe verwendet werden, derart über Sperrglieder miteinander gekoppelt sind, dass die Schaltelemente bei einer schaltungsbedingten Axialverschiebung einer der Schaltschienen oder der Verschwenkung einer der Schaltschwingen jeweils wechselseitig formschlüssig in ihrer Neutrallage fixiert sind.

Nachteilig an diesen bekannten Schaltsperrvorrichtungen ist deren unbedingte Funktionsweise, die zwar als Schaltsperre für ein einfaches Schaltgetriebe und jeweils für ein Teilgetriebe eines Doppelkupplungsgetriebes nutzbar ist, aber für die bedingte Sperrung eines bestimmten Gangs in Abhängigkeit eines anderen Gangs unbrauchbar ist. Beispielsweise kann es bei einem Doppelkupplungsgetriebe wünschenswert sein, dass der Rückwärtsgang entweder nur alleine oder zur Realisierung einer Freischaukelfunktion nur in Verbindung mit dem kleinsten Gang des anderen Teilgetriebes einlegbar ist, oder dass der höchste, dem einen Teilgetriebe zugeordnete Gang nur bei eingelegtem zweithöchsten, dem anderen Teilgetriebe zugeordneten Gang einlegbar ist.

Es ist daher das Problem der vorliegenden Erfindung, eine funktionssichere Schaltsperrvorrichtung zur Verfügung zu stellen, durch die ein über eine erste Schaltschiene einlegbarer Gang derart bedingt gegen ein Einlegen gesichert ist, dass das Einlegen des Gangs nur bei einem eingelegten anderen, einer zweiten Schaltschiene zugeordneten Gang möglich ist, wobei die Schaltsperrvorrichtung einfach und platzsparend aufgebaut sein sollte.

Das Problem wird erfindungsgemäß in Verbindung mit dem Oberbegriff des Anspruches 1 dadurch gelöst, dass das Sperrelement als eine quer zu der Längsachse der ersten Schaltschiene und in Richtung einer zweiten Schaltschiene schwenkbar gelagerte Sperrklinke ausgebildet ist, dass die Sperrklinke mittels eines Federelementes selbsttätig in einer Sperrposition gehalten wird, in der die Sperrklinke bei einer Axialverschiebung der ersten Schaltschiene gegen eine weitgehend radial ausgerichtete Sperrfläche stößt, und dass das Entriegelungselement als ein fest mit der zweiten Schaltschiene verbundener Entriegelungsnocken ausgebildet ist, durch den die Sperrklinke bei einer Axialverschiebung der zweiten Schaltschiene in eine einem geschalteten Gang entsprechende Endposition in eine Entriegelungsposition drückbar ist.

Vorteilhafte Ausgestaltungen der erfindungsgemäßen Schaltsperrvorrichtung sind in den Ansprüchen 2 bis 9 angegeben.

Die erfindungsgemäße Schaltsperrvorrichtung umfasst die schwenkbar gelagerte Sperrklinke, das Federelement, die Sperrfläche, und den Entriegelungsnocken und ist damit relativ einfach und platzsparend aufgebaut und kann praktisch in jedes Getriebe integriert werden. Durch die formschlüssige Wirkung ist damit ein bestimmter, einer ersten Schaltschiene zugeordneter Gang sicher derart bedingt gesichert, dass ein Einlegen des Gangs nur bei eingelegtem anderen, einer benachbarten zweiten Schaltschiene zugeordneten Gang möglich ist.

In Abhängigkeit von den gegebenen Platzverhältnissen und dem gewünschten Wirkzusammenhang kann die Sperrklinke wahlweise als ein endseitig drehbar gelagerter Pendelarm, der sowohl als Sperrhebel als auch als Entriegelungshebel wirksam ist, oder als ein weitgehend mittig drehbar gelagerter Wiegearm mit einem Sperrhebel und einem gegenüberliegend angeordneten Entriegelungshebel ausgebildet sein. Entsprechend kann die Sperrklinke entweder an einem Lagerbauteil der ersten Schaltschiene befestigt und die Sperrfläche an einem gehäusefesten Bauteil angeordnet sein oder aber die Sperrklinke an einem gehäusefesten Lagerbauteil befestigt und die Sperrfläche an der ersten Schaltschiene angeordnet sein. Bei Verwendung einer als Pendelarm ausgebildeten und an der ersten Schaltschiene drehbar gelagerten Sperrklinke sowie bei Verwendung einer als Wiegearm ausgebildeten und gehäusefest gelagerten Sperrklinke ergibt sich ein gleichgerichteter Wirkzusammenhang, d.h. zur Entriegelung des gesperrten Gangs der ersten Schaltschiene muss die zweite Schaltschiene in dieselbe Richtung verschoben werden, in die die erste Schaltschiene zum Einlegen des dann entsperrten Gangs verschoben wird, und damit der auf der gleichen Seite angeordnete Gang eingelegt werden. Im Gegensatz dazu ergibt sich bei Verwendung einer als Pendelarm ausgebildeten und gehäusefest gelagerten Sperrklinke sowie bei Verwendung einer als Wiegearm ausgebildeten und an der ersten Schaltschiene drehbar gelagerten Sperrklinke ein entgegengesetzt gerichteter Wirkzusammenhang, d.h. zur Entriegelung des gesperrten Gangs der ersten Schaltschiene muss die zweite Schaltschiene entgegengesetzt zu der Richtung verschoben werden, in die die erste Schaltschiene zum Einlegen des zuvor gesperrten Gangs verschoben wird, und damit der auf der gegenüberliegenden Seite angeordnete Gang eingelegt werden.

Zur Erzielung einer definierten Sperrposition der Sperrklinke weist das Lagerbauteil, an dem die Sperrklinke drehbar gelagert ist, vorteilhaft einen Anschlag auf. Hierdurch ist sichergestellt, dass der Entriegelungsnocken beim Entsperrungsvorgang die Sperrklinke immer in dem vorgesehenen Kontaktbereich trifft und sicher in die Entriegelungsposition drückt, und dass Fehlfunktionen der Schaltsperrvorrichtung, wie z.B. eine Verklemmung der Sperrklinke, vermieden werden.

Das Federelement, mit dem die Sperrklinke im unbetätigten Zustand in der Sperrposition gehalten wird, kann einfach und preisgünstig als Federdraht ausgebildet sein, der jeweils endseitig in einer Längsbohrung der Sperrklinke oder des Lagerbauteiles gelagert oder an einer querstehenden Stützfläche des Lagerbauteiles oder der Sperrklinke abgestützt ist. Das Federelement kann aber auch als Schenkelfeder ausgebildet sein, die koaxial zu der Lagerachse der Sperrklinke angeordnet ist, wobei jeweils ein Schenkel in einer Längsbohrung der Sperrklinke oder des Lagerbauteiles gelagert oder an einer querstehenden Stützfläche des Lagerbauteiles oder der Sperrklinke abgestützt sein kann. Des weiteren kann das Federelement auch als Schraubenfeder ausgebildet sein, die zwischen einem Hebel der Sperrklinke und dem Lagerbauteil angeordnet ist.

Weitere Einzelheiten der Erfindung ergeben sich aus der nachfolgenden ausführlichen Beschreibung und den beigefügten Zeichnungen, die beispielhaft zur Erläuterung der erfindungsgemäßen Schaltsperrvorrichtung dienen.

Hierzu zeigen:
- Figur 1: eine erste Ausführung der Schaltsperrvorrichtung am Beispiel eines Doppelkupplungsgetriebes in perspektivischer Darstellung, und
- Figur 2a - 2d: die erste Ausführung und weitere Ausführungen der Schaltsperrvorrichtung in schematischer Darstellung.

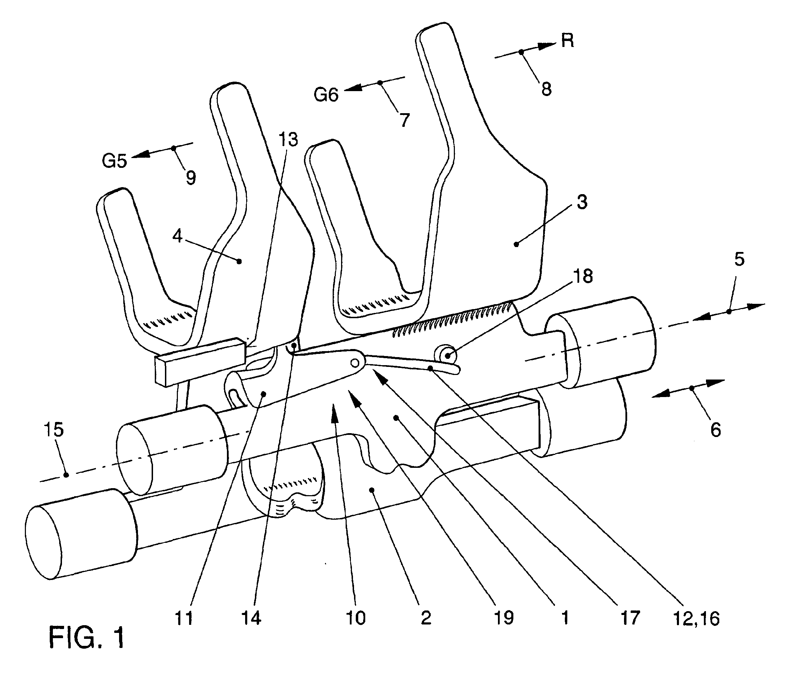

In Fig. 1 sind zwei parallel angeordnete Schaltschienen 1, 2 dargestellt, eine erste Schaltschiene 1, die einem ersten Teilgetriebe eines Doppelkupplungsgetriebes zugeordnet ist, und eine zweite Schaltschiene 2, die einem zweiten Teilgetriebe des Doppelkupplungsgetriebes zugeordnet ist. Die Schaltschienen 1, 2 sind axial verschiebbar gelagert und weisen jeweils eine Schaltgabel 3, 4 auf. Die Schaltgabeln 3, 4 stehen jeweils mit einer nicht abgebildeten Schaltmuffe in Eingriff, so dass durch eine Axialverschiebung 5, 6 der jeweiligen Schaltschiene 1, 2 in die eine oder andere Richtung jeweils einer von zwei zugeordneten Gängen ein- und auslegbar ist. Im vorliegenden Fall sind beispielhaft der ersten Schaltschiene 1 der sechste Vorwärtsgang G6 und der Rückwärtsgang R zugeordnet, wobei der sechste Gang G6 durch eine Axialverschiebung nach links 7 und der Rückwärtsgang R durch eine Axialverschiebung nach rechts 8 eingelegt und in der jeweiligen Gegenrichtung ausgelegt wird. Der zweiten Schaltschiene 2 ist einseitig nur der fünfte Vorwärtsgang G5 zugeordnet, wobei dieser durch eine Axialverschiebung nach links 9 eingelegt wird. In der Darstellung von Fig. 1 sind sowohl der fünfte Gang G5 als auch der sechste Gang G6 eingelegt, d.h. die zweite Schaltschiene 2 und die erste Schaltschiene 1 sind entsprechend nach links axial verschoben 9, 7.

Die beiden Schaltschienen 1, 2 stehen über eine erfindungsgemäße Schaltsperrvorrichtung 10 miteinander in Verbindung. Die Schaltsperrvorrichtung 10 umfasst eine Sperrklinke 11, ein Federelement 12, eine Sperrfläche 13, und einen Entriegelungsnocken 14. Die Sperrklinke 11 ist an der ersten Schaltschiene 1 quer zu deren Längsachse 15 und in Richtung der zweiten Schaltschiene 2 schwenkbar gelagert. Im unbetätigten Ruhezustand wird die Sperrklinke 11 mittels des als Federdraht 16 ausgebildeten Federelementes 12 selbsttätig in einer nicht abgebildeten Sperrposition gehalten, wobei der Federdraht 16 einerseits in einer Längsbohrung 17 der Sperrklinke 11 gelagert und andererseits an einem in der ersten Schaltschiene 1 querliegend angeordneten Bolzen 18 abgestützt ist. Wenn sich die Sperrklinke 11 in der Sperrposition befindet, stößt sie bei einer Axialverschiebung 7 der ersten Schaltschiene 1 nach links gegen die weitgehend radial ausgerichtete gehäusefeste Sperrfläche 13, so dass das Einlegen des sechsten Gangs G6 formschlüssig verhindert wird. Durch eine Axialverschiebung 9 der zweiten Schaltschiene 2 nach links, wodurch der fünfte Gang G5 eingelegt wird, wird die Sperrklinke 11 mittels des fest mit der zweiten Schaltschiene 2 verbundenen Entriegelungsnockens 14 gegen die Rückstellkraft des Federelementes 12 in eine in Fig. 1 dargestellte Entriegelungsposition 19 geschwenkt. In dieser Lage wird die Sperrklinke 11 bei einer Axialverschiebung 7 der ersten Schaltschiene 1 nach links an der Sperrfläche 13 vorbeigeführt, so dass das Einlegen des sechsten Gangs G6 damit freigegeben ist. Der sechste Gang G6 kann somit nur eingelegt werden, wenn zuvor der fünfte Gang G5 eingelegt worden ist. Die Schaltsperrvorrichtung 10 ist relativ einfach und platzsparend aufgebaut. Das ungewollte Einlegen des sechsten Gangs G6, das beispielsweise durch ein Überschiessen der ersten Schaltschiene 1 beim Auslegen des Rückwärtsgangs R bewirkt werden kann, ist somit mit einfachen und preiswerten Mitteln zuverlässig verhinderbar.

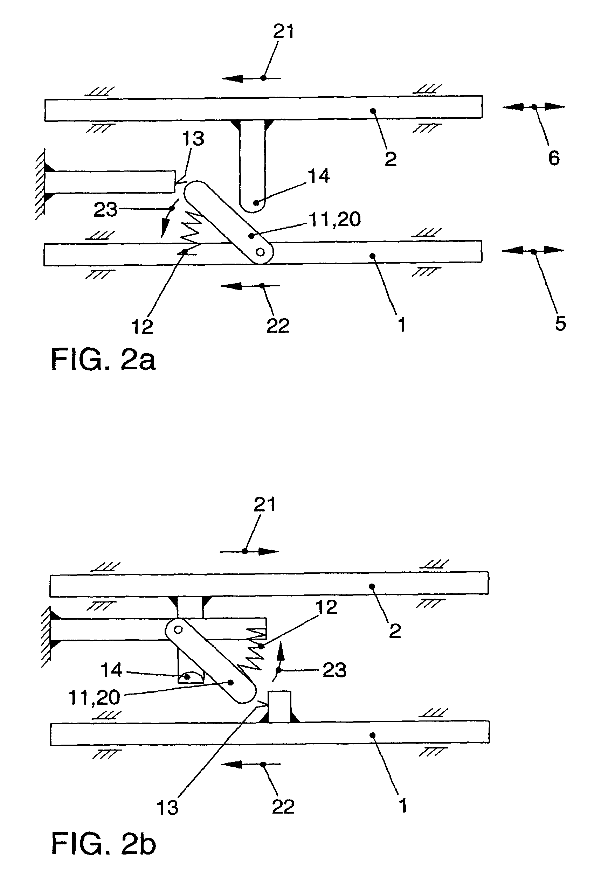

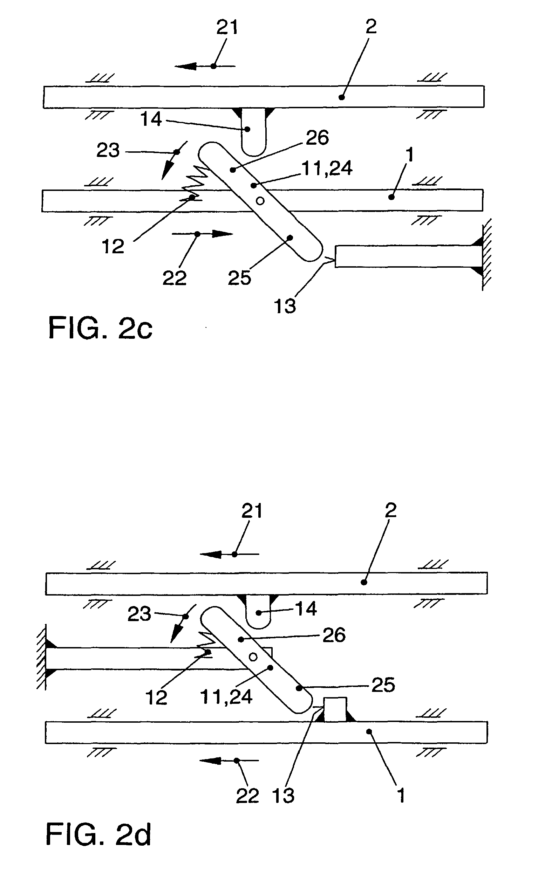

In den Fig. 2a - 2d sind verschiedene Ausführungen der erfindungsgemäßen Schaltsperrvorrichtung 10 schematisch dargestellt. In Fig. 2a ist die Sperrklinke 11 analog zu Fig. 1 als ein endseitig an der ersten Schaltschiene 1 drehbar gelagerter Pendelarm 20 ausgebildet, der sowohl als Sperrhebel als auch als Entriegelungshebel wirksam ist. Demzufolge muss die zweite Schaltschiene 2 zur Entsperrung der ersten Schaltschiene 1 in dieselbe Richtung axial verschoben werden wie die erste Schaltschiene 1 zum Einlegen des durch die Schaltsperrvorrichtung 10 gesicherten Gangs. Die Entsperrrichtung 21 der zweiten Schaltschiene 2 und die Schaltrichtung 22 der ersten Schaltschiene 1 sind also gleichgerichtet, wobei die Sperrklinke 11 bei der Entsperrung durch den fest mit der zweiten Schaltschiene 2 verbundenen Entriegelungsnocken 14 gegen die Rückstellkraft des Federelementes 12 in die Entsperrposition geschwenkt 23 wird, in der die Sperrklinke 11 bei einer Axialverschiebung der ersten Schaltschiene 1 in die Schaltrichtung 22 außerhalb der gehäusefesten Sperrfläche 13 liegt und somit der zuvor gesperrte Gang eingelegt werden kann. In Fig. 2b ist die Sperrklinke 11 ebenfalls als ein endseitig drehbar gelagerter Pendelarm 20 ausgebildet, jedoch gehäuseseitig gelagert, und die Sperrfläche 13 ist nunmehr an der ersten Schaltschiene 1 angeordnet. Dadurch ergibt sich ein entgegengesetzt gerichteter Wirkzusammenhang, d.h. zur Entriegelung des gesperrten Gangs der ersten Schaltschiene 1 muss die zweite Schaltschiene 2 entgegengesetzt zu der Schaltrichtung 22 verschoben werden, in die die erste Schaltschiene 1 zum Einlegen des zuvor gesperrten Gangs verschoben wird, und damit der auf der gegenüberliegenden Seite angeordnete Gang eingelegt werden. In Fig. 2c ist die Sperrklinke 11 als ein weitgehend mittig an der ersten Schaltschiene 1 drehbar gelagerter Wiegearm 24 mit einem Sperrhebel 25 und einem gegenüberliegend angeordneten Entriegelungshebel 26 ausgebildet und die Sperrfläche 13 ist gehäusefest angeordnet. Entsprechend ergibt sich ebenfalls ein entgegengesetzt gerichteter Wirkzusammenhang. Schließlich ist die Sperrklinke 11 in Fig. 2d zwar ebenfalls als weitgehend mittig gelagerter Wiegearm 24 ausgebildet, jedoch gehäuseseitig befestigt, und die Sperrfläche 13 ist an der ersten Schaltschiene 1 angeordnet, wodurch sich wieder ein gleichgerichteter Wirkzusammenhang ergibt.

### BEZUGSZEICHENLISTE

- 1: (erste) Schaltschiene
- 2: (zweite) Schaltschiene
- 3: Schaltgabel
- 4: Schaltgabel
- 5: Axialverschiebung
- 6: Axialverschiebung
- 7: Axialverschiebung (nach links)
- 8: Axialverschiebung (nach rechts)
- 9: Axialverschiebung (nach links)
- 10: Schaltsperrvorrichtung
- 11: Sperrklinke
- 12: Federelement
- 13: Sperrfläche
- 14: Entriegelungsnocken
- 15: Längsachse
- 16: Federdraht
- 17: Längsbohrung
- 18: Bolzen
- 19: Entriegelungsposition
- 20: Pendelarm
- 21: Entsperrrichtung
- 22: Schaltrichtung
- 23: Schwenkbewegung (in die Entsperrposition)
- 24: Wiegearm
- 25: Sperrhebel
- 26: Entriegelungshebel
- G5: fünfter Vorwärtsgang, fünfter Gang
- G6: sechster Vorwärtsgang, sechster Gang

- R: Rückwärtsgang

## Patentansprüche

1. Schaltsperrvorrichtung zur Gangschaltsperrung eines mechanisch schaltbaren Kraftfahrzeuggetriebes, insbesondere eines Doppelkupplungsgetriebes, mit einem formschlüssig wirksamen Sperrelement, durch das eine erste (1) von mindestens zwei parallel angeordneten Schaltschienen (1, 2) gegen eine Axialverschiebung (7) in eine einem geschalteten Gang (G6) entsprechende Endposition sperrbar ist, und mit einem Entriegelungselement zur Entsperrung der ersten Schaltschiene (1), **dadurch gekennzeichnet, dass** das Sperrelement als eine quer zu der Längsachse (15) der ersten Schaltschiene (1) und in Richtung einer zweiten Schaltschiene (2) schwenkbar gelagerte Sperrklinke (11) ausgebildet ist, dass die Sperrklinke (11) mittels eines Federelementes (12) selbsttätig in einer Sperrposition gehalten wird, in der die Sperrklinke (11) bei der Axialverschiebung (7) der ersten Schaltschiene (1) gegen eine weitgehend radial ausgerichtete Sperrfläche (13) stößt, und dass das Entriegelungselement als ein fest mit der zweiten Schaltschiene (2) verbundener Entriegelungsnocken (14) ausgebildet ist, durch den die Sperrklinke (11) bei einer Axialverschiebung (9) der zweiten Schaltschiene (2) in eine einem geschalteten Gang (G5) entsprechende Endposition in eine Entriegelungsposition (19) drückbar ist.

2. Schaltsperrvorrichtung nach Anspruch 1, **dadurch gekennzeichnet, dass** die Sperrklinke (11) als ein endseitig drehbar gelagerter Pendelarm (20) ausgebildet ist, der sowohl als Sperrhebel als auch als Entriegelungshebel wirksam ist.

3. Schaltsperrvorrichtung nach Anspruch 1, **dadurch gekennzeichnet, dass** die Sperrklinke (11) als ein weitgehend mittig drehbar gelagerter Wiegearm (24) mit einem Sperrhebel (25) und einem gegenüberliegend angeordneten Entriegelungshebel (26) ausgebildet ist.

4. Schaltsperrvorrichtung nach Anspruch 2 oder 3, **dadurch gekennzeichnet, dass** die Sperrklinke (11) an einem Lagerbauteil der ersten Schaltschiene (1) befestigt ist, und dass die Sperrfläche (13) an einem gehäusefesten Bauteil angeordnet ist.

5. Schaltsperrvorrichtung nach Anspruch 2 oder 3, **dadurch gekennzeichnet, dass** die Sperrklinke (11) an einem gehäusefesten Lagerbauteil befestigt ist, und dass die Sperrfläche (13) an der ersten Schaltschiene (1) angeordnet ist.

6. Schaltsperrvorrichtung nach Anspruch 4 oder 5, **dadurch gekennzeichnet, dass** das Lagerbauteil zur Erreichung einer definierten Sperrposition der Sperrklinke (11) einen Anschlag aufweist.

7. Schaltsperrvorrichtung nach einem der Ansprüche 4 bis 6, **dadurch gekennzeichnet, dass** das Federelement (12) als Federdraht (16) ausgebildet ist, der jeweils endseitig in einer Längsbohrung (17) der Sperrklinke oder des Lagerbauteiles gelagert oder an einer querstehenden Stützfläche des Lagerbauteiles oder der Sperrklinke abgestützt ist.

8. Schaltsperrvorrichtung nach einem der Ansprüche 4 bis 6, **dadurch gekennzeichnet, dass** das Federelement (12) als Schenkelfeder ausgebildet ist, die koaxial zu der Lagerachse der Sperrklinke (11) angeordnet ist, wobei jeweils ein Schenkel in einer Längsbohrung der Sperrklinke oder des Lagerbauteiles gelagert oder an einer querstehenden Stützfläche des Lagerbauteiles oder der Sperrklinke abgestützt ist.

9. Schaltsperrvorrichtung nach einem der Ansprüche 4 bis 6, **dadurch gekennzeichnet, dass** das Federelement (12) als Schraubenfeder ausgebildet ist, und dass die Schraubenfeder zwischen einem Hebel der Sperrklinke (11) und dem Lagerbauteil angeordnet ist.

## Claims

1. Shift lock apparatus for locking the gearshift of a mechanically shiftable motor-vehicle transmission, in particular a dual clutch transmission, having a locking element with a positively locking action and by which a first (1) of at least two selector rails (1, 2) which are arranged in parallel can be locked against an axial displacement (7) into an end position which corresponds to an engaged gear (G6), and having an unlocking element for unlocking the first selector rail (1), **characterized in that** the locking element is configured as a locking pawl (11) which is mounted such that it can pivot transversely with respect to the longitudinal axis (15) of the first selector rail (1) and in the direction of a second selector rail (2), **in that** the locking pawl (11) is held automatically by means of a spring element (12) in a locking position, in which, during the axial displacement (7) of the first selector rail (1), the locking pawl (11) comes into contact with a largely radially oriented locking face (13), and **in that** the unlocking element is configured as an unlocking cam (14) which is connected fixedly to the second selector rail (2) and by which, during an axial displacement (9) of the second selector rail (2) into an end position which corresponds to an engaged gear (G5), the locking pawl (11) can be pressed into an unlocking position (19).

2. Shift lock apparatus according to Claim 1, **characterized in that** the locking pawl (11) is configured as a pendulum arm (20) which is mounted rotatably at the end and acts as both a locking lever and an unlocking lever.

3. Shift lock apparatus according to Claim 1, **characterized in that** the locking pawl (11) is configured as a rocking arm (24) which is mounted such that it can rotate largely centrally and has a locking lever (25) and an unlocking lever (26) which is arranged opposite.

4. Shift lock apparatus according to Claim 2 or 3, **characterized in that** the locking pawl (11) is fastened to a bearing component of the first selector rail (1), and **in that** the locking face (13) is arranged on a component which is fixed to the housing.

5. Shift lock apparatus according to Claim 2 or 3, **characterized in that** the locking pawl (11) is fastened to a bearing component which is fixed to the housing, and **in that** the locking face (13) is arranged on the first selector rail (1).

6. Shift lock apparatus according to Claim 4 or 5, **characterized in that** the locking component has a stop for achieving a defined locking position of the locking pawl (11).

7. Shift lock apparatus according to one of Claims 4 to 6, **characterized in that** the spring element (12) is configured as spring wire (16) which is mounted in each case at the end in a longitudinal hole (17) of the locking pawl or the bearing component or is supported on a transverse supporting face of the bearing component or the locking pawl.

8. Shift lock apparatus according to one of Claims 4 to 6, **characterized in that** the spring element (12) is configured as a leg spring which is arranged coaxially with respect to the bearing axis of the locking pawl (11), in each case one limb being mounted in a longitudinal hole of the locking pawl or the bearing component or being supported on a transverse supporting face of the bearing component or the locking pawl.

9. Shift lock apparatus according to one of Claims 4 to 6, **characterized in that** the spring element (12) is configured as a helical spring, and **in that** the helical spring is arranged between a lever of the locking pawl (11) and the bearing component.

## Revendications

1. Mécanisme de verrouillage pour commande de changement de vitesse pour le verrouillage de changement de vitesse d'une boîte de vitesses de véhicule automobile à transmission mécanique, notamment d'une boîte de vitesses à double embrayage, comprenant un élément de verrouillage agissant par engagement par coopération de forme, qui permet de verrouiller un premier (1) d'au moins deux rails de changement de vitesse (1, 2) disposés en parallèle contre un déplacement axial (7), dans une position d'extrémité correspondant à une vitesse enclenchée (G6), et comprenant un élément de déverrouillage pour déverrouiller le premier rail de changement de vitesse (1), **caractérisé en ce que** l'élément de verrouillage est réalisé sous forme d'un cliquet de verrouillage (11) monté de manière à pouvoir pivoter transversalement à l'axe longitudinal (15) du premier rail de changement de vitesse (1) et dans la direction d'un deuxième rail de changement de vitesse (2), **en ce que** le cliquet de verrouillage (11) est maintenu automatiquement au moyen d'un élément à ressort (12) dans une position de verrouillage dans laquelle le cliquet de verrouillage (11) vient buter au cours du déplacement axial (7) du premier rail de changement de vitesse (1) contre une surface de verrouillage (13) orientée essentiellement radialement, et **en ce que** l'élément de déverrouillage est réalisé sous forme de came de déverrouillage (14) connectée fixement au deuxième rail de changement de vitesse (2) et qui permet de presser le cliquet de verrouillage (11) dans une position de déverrouillage (19) lors d'un déplacement axial (9) du deuxième rail de changement de vitesse (2) dans une position d'extrémité correspondant à une vitesse enclenchée (G5).

2. Mécanisme de verrouillage pour commande de changement de vitesse selon la revendication 1, **caractérisé en ce que** le cliquet de verrouillage (11) est réalisé sous forme de bras pendulaire (20) monté à rotation du côté de son extrémité, qui agit à la fois en tant que levier de verrouillage et en tant que levier de déverrouillage.

3. Mécanisme de verrouillage pour commande de changement de vitesse selon la revendication 1, **caractérisé en ce que** le cliquet de verrouillage (11) est réalisé sous la forme d'un bras de pesage (24) monté à rotation essentiellement centralement, avec un levier de verrouillage (25) et un levier de déverrouillage (26) opposé.

4. Mécanisme de verrouillage pour commande de changement de vitesse selon la revendication 2 ou 3, **caractérisé en ce que** le cliquet de verrouillage (11) est fixé sur un composant de palier du premier rail de changement de vitesse (1), et **en ce que** la surface de verrouillage (13) est disposée sur un composant fixé au boîtier.

5. Mécanisme de verrouillage pour commande de changement de vitesse selon la revendication 2 ou 3, **caractérisé en ce que** le cliquet de verrouillage (11) est fixé sur un composant de palier fixé au boîtier, et **en ce que** la surface de verrouillage (13) est disposée sur le premier rail de changement de vitesse (1).

6. Mécanisme de verrouillage pour commande de changement de vitesse selon la revendication 4 ou 5, **caractérisé en ce que** le composant de palier présente une butée pour atteindre une position de verrouillage définie du cliquet de verrouillage (11).

7. Mécanisme de verrouillage pour commande de changement de vitesse selon l'une quelconque des revendications 4 à 6, **caractérisé en ce que** l'élément de ressort (12) est réalisé sous forme de fil à ressort (16) qui est monté à chaque fois du côté de l'extrémité dans un alésage oblong (17) du cliquet de verrouillage ou du composant de palier ou qui est supporté sur une surface de support transversale du composant de palier ou du cliquet de verrouillage.

8. Mécanisme de verrouillage pour commande de changement de vitesse selon l'une quelconque des revendications 4 à 6, **caractérisé en ce que** l'élément de ressort (12) est réalisé sous forme de ressort à branches, qui est disposé coaxialement par rapport à l'axe de palier du cliquet de verrouillage (11), une branche étant à chaque fois montée dans un alésage oblong du cliquet de verrouillage ou du composant de palier, ou sur une surface de support transversale du composant de palier ou du cliquet de verrouillage.

9. Mécanisme de verrouillage pour commande de changement de vitesse selon l'une quelconque des revendications 4 à 6, **caractérisé en ce que** l'élément de ressort (12) est réalisé sous forme de ressort à boudin, et **en ce que** le ressort à boudin est disposé entre un levier du cliquet de verrouillage (11) et le composant de palier.
